# EUROPEAN PATENT SPECIFICATION

(11) **EP 3 957 478 B1**
(45) Date of publication and mention of the grant of the patent: **18.10.2023**
(21) Application number: 20792176.8
(22) Date of filing: 10.04.2020
(51) Int. Cl.: B32B 27/00, B65D 63/10, D04H 3/011, D04H 3/16, C09J 7/21, C09J 7/38, D04H 3/14

(54) **BINDING TAPE**
BINDEBAND
BANDE DE LIAISON

(30) Priority: 16.04.2019 JP 2019077578
(43) Date of publication of application: 23.02.2022
(73) Proprietor: Denka Company Limited, Tokyo 103-8338 (JP)
(72) Inventor: TATE, Yousuke, Tokyo 103-8338 (JP); KIMURA, Akiyoshi, Tokyo 103-8338 (JP); YOSHIMURA, Daisuke, Tokyo 103-8338 (JP)
(74) Representative: Gerauer, Marc Philippé
(86) International application number: PCT/JP2020/016089
(87) International publication number: WO 2020/213521

(56) References cited:
- EP-A1- 1 194 495
- WO-A1-2011/081132
- JP-A- 2003 503 538
- JP-A- 2004 524 376
- JP-A- 2006 210 228
- JP-A- 2006 520 863
- US-A1- 2004 082 243
- DATABASE WPI Week 200657 10 August 2006 (2006-08-10) Thomson Scientific, London, GB; AN 2006-554337 XP002806346, & JP 2006 210228 A (NITTO SHINKO CORP) 10 August 2006 (2006-08-10) & JP 2006 210228 A (NITTO SHINKO KK; YAMABUN YUKA KK) 10 August 2006 (2006-08-10)

## Description

### TECHNICAL FIELD

The present invention relates to a binding tape.

### BACKGROUND

In automobile wiring, electrical wires bundled into a prescribed shape using a binding tape, or the like, are conventionally used. Such electrical wires are normally installed in small concealed locations inside an engine room or between a vehicle body and an interior finishing material. As a result, there is a problem wherein engine vibration or shaking when a vehicle is in motion causes wires to vibrate, come into contact with a surrounding wall, etc., and emit tapping noises or scratching noises.

Binding tapes configured with a polyvinyl chloride tape as a substrate are often used for binding tapes for binding electrical wires, etc. However, in uses which demand sound deadening properties, binding tapes provided with a substrate layer comprising non-woven cotton, or the like, and an adhesive layer are used. By using a binding tape having a substrate layer comprising a non-woven fabric in such a manner, when the electrical wires come into contact with a surrounding wall, etc., inside an automobile, the non-woven fabric acts as a cushioning material and it is possible to attenuate tapping noises and scratching noises. As a binding tape having such sound deadening properties, Patent Document 1, for example, discloses an adhesive tape provided, mechanically or wet-laid on a reinforced web, with a substrate layer comprising a non-woven fabric to which a binder was added.

However, binding tapes having a substrate layer comprising a non-woven fabric such as that described above may experience a phenomenon called "layer separation" in which the substrate layer peels into two layers - an upper layer and a lower layer - when the tape is rewound or when the tape is drawn from a tape roll. Since a section in which such "layer separation" occurs cannot be used as a binding tape, replacement with a new tape is necessary, and thus, there is a problem of a reduction in work efficiency.

As a binding tape that can suppress such a phenomenon of layer separation, Patent Document 2, for example, discloses a sound deadening tape provided, on a partially thermally-fused non-woven fabric, with a substrate layer to which a urethane resin and a polyethylene wax were added as a binder.

JP 2003 503538 A relates to nonwoven sheet materials, and adhesive articles formed therefrom are provided that are made with fibers, preferably tensilized nonfracturable staple fibers, and binder fibers, and formed from a combination of interbonding, smooth roll calendering, and pattern embossing techniques.

WO 2011 081132 A1 discloses a binding adhesive sheet for wiring harnesses, which uses a cross-linked foamed polyethylene embossed sheet in which the problems associated with a foamed polyurethane sheet, such as water resistance, are improved.

JP 2004 524376 A discloses an adhesive tape for wrapping elongate product, especially cable harnesses, having a web-based backing provided on at least one side with an adhesive coating, said backing having a basis weight of from 20 to 80 g/m², in particular from 35 to 50 g/m², characterized in that the adhesive tape achieves a noise attenuation of from 3 to 10 dB(A), in particular from 4 to 6 dB(A) (measured in accordance with BMW Standard GS 95008-3 May 2000).

JP 2006 210228 A provides a sound deadening tape which suppresses a decrease in workability and sound deadening performance even in a diameter-decreased wire harness.

JP 2006 520863 A relates to a pattern bonded nonwoven fabric comprising a nonwoven fiber web having a geometrically repeating and visually discernable base pattern of bond points having at least one shape with at least one area defined by the shape and a second visually distinguishable bond pattern incorporated within said base pattern.

### CITATION LIST

### PATENT LITERATURE

Patent Document 1: JP 2004-524376 A
Patent Document 2: JP 2006-210228 A

### SUMMARY OF THE INVENTION

### TECHNICAL PROBLEM

However, the sound deadening tape disclosed in Patent Document 2 has a problem of low abrasion resistance.

Thus, the present invention has an objective of providing a binding tape which has sound deadening properties, can suppress layer separation, and is also excellent in abrasion resistance.

### SOLUTION TO PROBLEM

As a result of diligent research into the abovementioned problem, the present inventors discovered that by using, as a substrate layer, a non-woven fabric having formed therein at least two types of fused sections having different shapes, it is possible to solve the problem, which led to the completion of the present invention.

That is, the present invention has the following embodiments.
(1) A binding tape having a substrate layer comprising a non-woven fabric, and an adhesive layer,
   wherein the substrate layer is provided with at least two types of fused sections having different shapes or having different sizes,
   wherein with respect to the total area of the substrate layer, the area of at least one of the types of the fused sections is 5% or more and the total area of the fused sections is 25-40%.
(2) The binding tape described in (1), wherein the fused sections are formed by thermally fusing fibers of the non-woven fabric by a heat embossing.
(3) The binding tape described in (1) or (2), having a scrape abrasion resistance repetition number of 100 times or more, as obtained by the measuring method described in the description.
(4) The binding tape described in any one of (1) to (3), wherein fibers constituting the non-woven fabric are polyester fibers.
(5) The binding tape described in any one of (1) to (4), wherein the non-woven fabric has a basis weight of 50-200 g/m².
(6) The binding tape described in any one of (1) to (5), wherein the non-woven fabric has an apparent density of 0.1-0.4 g/cm³.
(7) The binding tape described in any one of (1) to (6), wherein the substrate layer has a thickness of 300-600 µm.
(8) The binding tape described in any one of (1) to (7), wherein the binding tape is for binding electrical wires.

### EFFECTS OF INVENTION

According to the present invention, it is possible to provide a binding tape which has sound deadening properties, can suppress layer separation, and is also excellent in abrasion resistance.

### DESCRIPTION OF EMBODIMENTS

The present invention shall be explained in more detail below. However, the present invention is not limited to the following embodiments.

### [Binding tape]

The binding tape according to the present invention is a binding tape having a substrate layer comprising a non-woven fabric, and an adhesive layer, wherein the substrate layer is provided with at least two types of fused sections having different shapes or having different sizes,
wherein with respect to the total area of the substrate layer, the area of at least one of the types of the fused sections is 5% or more and the total area of the fused sections is 25-40%.

### (Substrate layer)

The substrate layer of the binding tape according to the present invention comprises a non-woven fabric. That is, a "substrate layer comprising a non-woven fabric" means a sheet-type substrate in which fibers constituting a non-woven fabric are combined without being woven.

The substrate layer comprising a non-woven fabric of the present invention is provided with at least two types of fused sections having different shapes. In one embodiment of the present invention, the fused sections of the substrate layer are preferably disposed on a surface side of the substrate layer different from the surface on which the adhesive layer is laminated. That is, it is preferable for the fused sections to be disposed on the outermost layer of the substrate layer.

The fused sections are formed as recessed sections in the non-woven fabric surface by joining fibers constituting the non-woven fabric to one another. The fused sections may be formed by a mechanical treatment and may be formed by an embossing. In one embodiment of the present invention, the fused sections are preferably formed by thermally fusing fibers of the non-woven fabric by a heat embossing. Due to having such fused sections, layer separation of the substrate layer is more easily suppressed and abrasion resistance of the binding tape is further improved. That is, by providing the substrate layer with at least two types of fused sections having different shapes, horizontal direction stress relaxation that acts during abrasion becomes large and abrasion resistance is improved.

The substrate layer has at least two types of fused sections. There are preferably 2-5 types and particularly preferably 2 or 3 types of the fused sections.

The at least one of the types of the fused sections in the substrate layer has, with respect to the total area of the substrate layer, an area of 5% or more, and more preferably 10-20%. Further, the total area of the fused sections with respect to the total area of the substrate layer is 25-40%. If the area of at least one of the types of the fused sections is 5% or more, an effect wherein horizontal direction stress relaxation acts during abrasion is more readily obtained. Further, if the total area of the fused sections is within the ranges described above, an effect wherein horizontal direction stress relaxation acts during abrasion is more readily obtained. Note that the area of the fused sections is a value relative to the total area of a surface on a side of the substrate layer where the fused sections are formed.

In one embodiment of the present invention, "fused sections having different shapes" includes not only fused sections having different shapes but also fused sections having different sizes.

As long as the effects of the present invention are exhibited, the shape of the fused sections is not particularly limited, and examples thereof include circular shapes (true circles and ellipses), rhomboids (rhombi and similar shapes thereto), etc.

When the shape of a fused section is circular, the diameter thereof is preferably 0.5-1.4 mm and more preferably 0.6-1.2 mm. Note that when a fused section is elliptical, the diameter mentioned above means the length of the major axis of the ellipse. In one embodiment of the present invention, when fused sections are circular, the fused sections preferably include at least a fused section A which has a diameter of 0.9-1.4 mm and preferably 1.0-1.2 mm, and a fused section B which has a diameter of 0.5-0.9 mm and preferably 0.6-0.8 mm.

Further, when the fused section is a rhomboid, the area thereof is preferably 0.2-1.6 mm² and more preferably 0.2-1.2 mm². In one embodiment of the present invention, when fused sections are rhomboids, the fused sections preferably include at least a fused section I which has an area of 0.6-1.6 mm² and preferably 0.8-1.2 mm², and a fused section II which has an area of 0.2-0.8 mm² and preferably 0.2-0.5 mm².

In one embodiment of the present invention, it is preferable for the shape of the fused sections to be rhomboids since layer separation is suppressed and abrasion resistance is more easily improved.

The fused sections may be arranged randomly on the non-woven fabric and may be arranged in a linear manner or as a lattice.

In one embodiment of the present invention, when fused sections are circular, preferably 10-40 and more preferably 10-30 of the fused sections A are arranged in a 1 cm x 1 cm range of the substrate layer comprising the non-woven fabric. Further, preferably 10-40 and more preferably 10-30 of the fused sections B are arranged in a 1 cm x 1 cm range of the substrate layer. By arranging the fused sections A and the fused sections B within the ranges mentioned above, the effect of suppressing layer separation of the substrate layer is enhanced. Further, the abrasion resistance of the binding tape is more easily improved.

Further, in one embodiment of the present invention, when fused sections are rhomboids, preferably 10-50 and more preferably 15-40 of the fused sections I are arranged in a 1 cm x 1cm range of the substrate layer comprising the non-woven fabric. Further, preferably 10-50 and more preferably 15-40 of the fused sections II are arranged in a 1 cm x 1 cm range of the substrate layer. By arranging the fused sections I and the fused sections II within the ranges mentioned above, the effect of suppressing layer separation of the substrate layer is enhanced. Further, the abrasion resistance of the binding tape is more easily improved.

As long as the effects of the present invention are exhibited, the non-woven fabric to be used in the substrate layer is not particularly limited, and it is possible to use, for example, a non-woven fabric made by a spunbond method, a non-woven fabric made by a spunlace method, or a non-woven fabric made by a melt blowing method, etc. Further, the non-woven fabric may be a single layer and may be a laminated non-woven fabric comprising a plurality of layers. Further, in the case of being a laminated non-woven fabric, non-woven fabrics made by a plurality of methods may be laminated therein. Among the foregoing, from the perspective of mechanical strength, it is preferable to use a non-woven fabric made by a spunbond method.

Further, the basis weight of the non-woven fabric is preferably 50-200 g/m² and more preferably 60-140 g/m². If the basis weight of the non-woven fabric is within the ranges mentioned above, an increase in tape weight is contained and abrasion resistance strength is more easily obtained. Further, as a void ratio of the nonwoven fabric, 40-90% is preferable.

Further, as an apparent density, 0.1-0.4 g/cm³ is preferable and 0.2-0.4 g/cm³ is more preferable. If the apparent density of the non-woven fabric is within the ranges mentioned above, abrasion resistance strength is maintained and flexibility of electrical wires, after binding is also more easily obtained

As long the effects of the present invention are exhibited, the fibers constituting the non-woven fabric are not particularly limited and examples thereof include aramid fibers, glass fibers, cellulose fibers, nylon fibers, vinylon fibers, polyester fibers, polyolefin fibers, and rayon fibers, etc. It is possible to use one kind of these fibers alone, and it is also possible to use two or more kinds thereof in combination. Among the foregoing, in terms of achieving both high abrasion resistance and sound deadening properties, and also from the perspective of improved heat resistance, polyester fibers are preferable.

From the perspective of abrasion resistance and flexibility, the fiber diameter of the fibers constituting the non-woven fabric is preferably 3-30 µm and more preferably 5-20 µm. If the fiber diameter of the non-woven fabric is within the ranges mentioned above, flexibility of bound articles such as electrical wires, is maintained and effects of high abrasion resistance strength are also more easily obtained.

The thickness of the substrate layer is preferably 300-600 µm and more preferably 300-500 µm. If the thickness of the substrate layer is within the ranges mentioned above, cushioning properties are maintained and flexibility of electrical wires, after binding is also more easily obtained. Note that the thickness of the substrate layer means an average value of measurements at three locations on a section where the fused sections are not provided, with measurements being made using a dial gauge stipulated by JIS B 7503.

In the binding tape according to the present invention, as described above, the fused sections provided to the substrate layer are preferably formed by thermally fusing fibers constituting the non-woven fabric by a heat embossing. That is, the fused sections are preferably formed by sandwiching and compressing the non-woven fabric between a flat roll and a heat embossing roll that has formed on the surface thereof protrusions for forming the fused sections of the present invention. The heat embossing may be performed in one step by using an embossing roll that has formed on the surface thereof at least two types of protrusions having different shapes. The heat embossing may also be performed in multiple steps by using a plurality of embossing rolls.

The temperature when carrying out the heat embossing may be adjusted, as appropriate, according to the fibers constituting the non-woven fabric, but when using a non-woven fabric comprising polyester fibers, for example, the temperature is preferably 180-250°C and more preferably 200-240°C.

### (Adhesive layer)

The adhesive layer of the present invention is preferably configured from an adhesive. As long as the effects of the invention are exhibited, the adhesive is not particularly limited and it is possible to use, as appropriate, adhesives conventionally used in binding tapes. Specifically, it is possible to use, for example, an acrylic adhesive, a rubber-based adhesive, a silicone-based adhesive, or a urethane-based adhesive, etc., as the adhesive.

An adhesive having an acrylic polymer as a main component may, for example, be used as the acrylic adhesive.

Examples of the acrylic polymer include a polymer of a (meth)acrylic acid alkyl ester and a carboxy group-containing unsaturated monomer, etc.

Examples of a (meth)acrylic acid alkyl ester include methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, sec-butyl acrylate, sec-butyl methacrylate, tert-butyl acrylate, tert-butyl methacrylate, 2-ethylhexyl acrylate, 2-ethylhexyl methacrylate, n-octyl acrylate, n-octyl methacrylate, isooctyl acrylate, isooctyl methacrylate, n-nonyl acrylate, n-nonyl methacrylate, isononyl acrylate, and isononyl methacrylate, etc. It is possible to use one of the foregoing alone, and it is also possible to use two or more thereof in combination.

If copolymerizable with the (meth)acrylic acid alkyl ester described above and as long as the effects of the present invention are exhibited, the carboxy group-containing unsaturated monomer is not particularly limited, and it is possible to use, for example, acrylic acid, methacrylic acid, itaconic acid, fumaric acid, and maleic acid, etc. It is possible to use one of the foregoing alone, and it is also possible to use two or more thereof in combination.

The acrylic polymer may also be configured as a copolymer comprising monomers other than a (meth)acrylic acid alkyl ester and a carboxy group-containing unsaturated monomer such as that described above.

Examples of the other monomers include hydroxy group-containing monomers such as 2-hydroxyethyl (meth)acrylate, 2-hydroxypropyl (meth)acrylate, and hydroxyhexyl (meth)acrylate, etc., nitrogen-containing (meth)acrylates such as (meth)acrylamide, acryloyl morpholine, and (meth)acrylonitrile, etc., vinyl acetate, styrene, vinylidene chloride, and vinyl propionate, etc. It is possible to use one of the foregoing alone, and it is also possible to use two or more thereof in combination.

In one embodiment of the present invention, when an acrylic adhesive is used as the adhesive constituting the adhesive layer, from the perspective of preventing a phenomenon (bleed-through) wherein a low molecular weight component included in the acrylic adhesive permeates the non-woven fabric of the substrate layer, the acrylic polymer is preferably cross-linked.

Examples of a method for cross-linking the acrylic polymer include a method wherein an active energy ray (ultraviolet ray, electron ray, etc.) is irradiated, and a method wherein an arbitrary cross-linking agent is added, etc.

Examples of the arbitrary cross-linking agent include epoxy-based cross-linking agents, polyfunctional isocyanate-based cross-linking agents, melamine resin-based cross-linking agents, metal salt-based cross-linking agents, metal chelate-based cross-linking agents, amino resin-based cross-linking agents, and peroxide-based cross-linking agents, etc. It is possible to use one of the foregoing alone, and it is also possible to use two or more thereof in combination.

Examples of the rubber-based adhesive include adhesives in which at least one tackifier selected from the group consisting of rosin-based resins, terpene-based resins, petroleum-based resins, etc., is blended, as appropriate, in at least one rubber component selected from the group consisting of natural rubber, styrene-isoprene-styrene block copolymers (SIS), styrene-butadiene-styrene block copolymers (SBS), hydrogenated products of the styrene-based block copolymers (SIPS, SEBS), styrene-butadiene rubbers (SBR), polyisoprene rubber (IR), polyisobutylene (PIB), and butyl rubber (IIR), etc.

Examples of the silicone-based adhesive include adhesives in which a silicone resin or a silicone oil, etc., is blended, as appropriate, in a silicone rubber.

Examples of the urethane-based adhesive include adhesives obtained by reacting a polyol such as a polyether-based polyol or a polyester-based polyol, etc., with a polyisocyanate such as tolylene diisocyanate (TDI), methylene diphenyl diisocyanate (MDI), hexamethylene diisocyanate (HDI), or xylylene diisocyanate (XDI), etc.

With respect to the adhesive for forming the adhesive layer, an arbitrary additive may be included in the adhesive described above.

Examples of the additive include softeners, tackifiers, surface lubricants, leveling agents, antioxidants, corrosion inhibitors, photostabilizers, ultraviolet absorbers, thermal stabilizers, polymerization inhibitors, silane coupling agents, lubricants, inorganic and organic fillers, metal powders, and pigments, etc. It is possible to use one of the foregoing alone, and it is also possible to use two or more thereof in combination.

Examples of tackifiers include petroleum-based resins such as aliphatic-based copolymers, aromatic-based copolymers, aliphatic/aromatic-based copolymers, and alicyclic-based copolymers, etc., rosin-based resins such as coumarone-indene-based resins, terpene-based resins, terpene-phenol-based resins, and polymerized rosin, etc., (alkyl) phenol-based resins, xylene-based resins or hydrogenated products thereof, etc. It is possible to use one of the foregoing alone, and it is also possible to use two or more thereof in combination.

In one embodiment of the present invention, from the perspective of heat resistance and control of adhesive strength, it is preferable to use an acrylic adhesive as an adhesive for configuring the adhesive layer.

As long as the effects of the present invention are exhibited, the thickness of the adhesive layer is not particularly limited, but is, for example, preferably 5-100 µm and more preferably 10-50 µm.

Further, the adhesive layer may be configured from a plurality of layers. When the adhesive layer is configured from a plurality of layers, the total thickness of the adhesive layer is preferably adjusted so as to be within the ranges mentioned above.

### (Intermediate layer)

In one embodiment of the present invention, an intermediate layer may be provided between the substrate layer and the adhesive layer. As long as the effects of the invention are exhibited, the intermediate layer is not particularly limited and it is possible to use, for example, various kinds of films, cloths, etc.

The total thickness of the binding tape according to the present invention is preferably 300-700 µm and more preferably 300-500 µm. If the total thickness of the binding tape is within the ranges mentioned above, cushioning properties are maintained and flexibility of electrical wires, after binding is also more easily obtained.

The binding tape according to the present invention preferably has a scrape abrasion resistance repetition number of 100 times or more, as obtained by a measuring method compliant with ISO 6722. As described above, by providing the substrate layer with at least two types of fused sections having different shapes, horizontal direction stress relaxation that acts during abrasion becomes large, and therefore, the binding tape according to the present invention is excellent in abrasion resistance. Note that the scrape abrasion resistance repetition number specifically indicates a value measured by the method described below.

### <Method for measuring scrape abrasion resistance repetition number>

One layer of the binding tape with a length of 50 mm in the longitudinal direction is attached to a steel rod having a diameter of 10 mm. Next, a piano wire having a diameter of 0.45 mm is brought into contact with the substrate layer side of the binding tape, a load of 7 N is applied thereto, and the piano wire is moved back and forth over a longitudinal direction distance of 15.5 mm at a speed of 60 repetitions/minute. At that time, the piano wire scrapes the binding tape and the number of times back and forth until the binding tape is penetrated is set as the scrape abrasion resistance repetition number.

### [Method for producing binding tape]

Examples of methods for producing the binding tape according to the present invention include: a method wherein the substrate layer is configured by forming fused sections on one surface of the non-woven fabric by the heat embossing described above, and thereafter, the adhesive described above is applied directly to the substrate layer to form the adhesive layer; and a method wherein the adhesive is first applied to a separate sheet and then transferred to the substrate layer, etc. Note that the adhesive for forming the adhesive layer is preferably configured as the adhesive layer by being applied to a surface side different from the surface on which the fused sections of the substrate layer are formed.

Examples of methods for applying the adhesive to the substrate layer or to a separate sheet include a roll coating method, a spray coating method, a gravure coating method, a reverse coating method, a rod coating method, a bar coating method, a die coating method, a kiss coating method, a reverse kiss coating method, and an air knife coating method, etc.

### [Uses]

As described above, the binding tape according to the present invention can suppress layer separation of the substrate layer and is also excellent in abrasion resistance. Further, due to having sound deadening properties, the binding tape according to the present invention can be preferably used as a binding tape in fields which demand these properties, for example, for electrical wires of automobiles, and the like. Naturally, the binding tape of the present embodiment is not limited to a use for binding electrical wires,

Another preferred embodiment of the binding tape according to the present invention is as a binding tape having a substrate layer comprising a non-woven fabric and an adhesive layer provided to one side of the substrate layer, wherein the substrate layer is provided with at least two types of fused sections having different shapes or having different sizes, wherein with respect to the total area of the substrate layer, the area of at least one of the types of the fused sections is 5% or more and the total area of the fused sections is 25-40%, and the fused sections are provided on the outermost layer of the substrate layer. The basis weight of the nonwoven fabric is preferably 50-200 g/m² and the apparent density of the non-woven fabric is preferably 0.1-0.4 g/cm³. Further, the fiber diameter of the non-woven fabric is preferably 3-30 µm. Further, the thickness of the substrate layer is preferably 300-600 µm. Further, the shape of the fused sections is preferably a rhomboid shape, and there are preferably at least: a rhomboid-shaped fused section I having an area of 0.6-1.6 mm² and preferably 0.8-1.2 mm²; and a rhomboid-shaped fused section II having an area of 0.2-0.8 mm² and preferably 0.2-0.5 mm².

### EXAMPLES

Examples are provided below to describe the present invention in more detail. However, the present invention is not limited by the following descriptions.

### [Example 1]

### (Fabrication of substrate layer)

A heat embossing was carried out at a temperature of 240°C on a non-woven fabric consisting of polyethylene terephthalate fibers having a fiber diameter of 20 µm, a basis weight of 100 g/m², an apparent density of 0.29 g/m³ to form a fused section 1 and a fused section 2 in the non-woven fabric and obtain a substrate layer. The thickness of the obtained substrate layer was 350 µm. The fused section 1 was configured as a rhomboid with an area of 0.8 mm² and the fused section 2 was configured as a rhomboid with an area of 0.4 mm². Further, with respect to the total area of the substrate layer, the area of the fused section 1 was 20% and the area of the fused section 2 was 10%. Further, the total area of the fused sections was 30%.

### (Fabrication of binding tape)

An acrylic adhesive emulsion was prepared by blending 1 part by mass of an epoxy curing agent (product name: "TETRAD^{®} - C", manufactured by Mitsubishi Gas Chemical, Inc.) with respect to 100 parts by mass of a water-soluble acrylic acid ester emulsion (product name: "Acryset^{®} SKE-4851", manufactured by Nippon Shokubai Co., Ltd.). The emulsion was coated on a silicone-based release paper (product name: "KP-8", manufactured by Lintec Corporation) such that the coating amount is 40 g/m² in solids, transferred to a surface on a side of the substrate layer on which fused sections are not formed to form an adhesive layer and obtain a binding tape. Layer separation, sound deadening properties, and abrasion resistance of the obtained binding tape were evaluated following the procedures described below. The results are shown in Table 1.

### <Evaluation of layer separation>

A 19 mm wide x 200 mm long adhesive surface of the binding tape was overlaid on a 19 mm wide x 250 mm long substrate layer of the binding tape, kept at a temperature of 50°C for 24 hours and then cooled to room temperature. Next, the binding tape adhered on the substrate layer was peeled by being pulled sharply by hand in an approximately 90°upward direction from an end section thereof to confirm the absence or presence of layer separation, with cases in which layer separation and fraying did not occur being regarded as a pass.

### <Evaluation of sound deadening properties>

A damping value of the binding tape was measured by using the method described below and sound deadening properties were evaluated in line with the evaluation criteria below.

An aluminum plate having a thickness of 0.3 mm and dimensions of 350 mm x 190 mm was bent into a semicircular shape having a diameter of 290 mm, and a steel rod with an 8 mm diameter was dropped from a position 20 mm above the highest point of the aluminum plate at a load of 0.16 N. At that time, sound pressure at impact was measured by a microphone installed 50 mm above the impact position. A sound pressure value measured for the steel rod alone was set as a blank, and a difference between the blank and a sound pressure value measured when one layer of the binding tape was attached to the steel rod at the impact position was determined to be the damping value. Further, sound deadening properties were evaluated in line with the evaluation criteria below, with an A evaluation being regarded as a pass.

### (Evaluation criteria)

A: The damping value is 5 dB or more.
B: The damping value is less than 5 dB.

### <Evaluation of abrasion resistance>

One layer of the binding tape with a length of 50 mm in the longitudinal direction was attached to a steel rod having a diameter of 10 mm. A piano wire having a diameter of 0.45 mm was brought into contact with the substrate layer side of the binding tape, a load of 7 N was applied thereto, and the piano wire was moved back and forth over a longitudinal direction distance of 15.5 mm at a speed of 60 repetitions/minute. At that time, the piano wire scraped the binding tape and the number of repetitions back and forth until the binding tape was penetrated was determined to be the scrape abrasion resistance repetition number. Further, abrasion resistance was evaluated in line with the evaluation criteria below, with an A evaluation being regarded as a pass.

### (Evaluation criteria)

A: The scrape abrasion resistance repetition number is 100 times or more.
B: The scrape abrasion resistance repetition number is less than 100 times.

### [Examples 2-7 and Comparative Example 1]

Apart from the configurations of the non-woven fabric and the fused sections being those shown in Table 1, the binding tape was fabricated using the same method as Example 1. Further, layer separation, sound deadening properties, and abrasion resistance of the binding tape of each example were evaluated by the same methods as Example 1. The results are shown in Table 1. Note that in Table 1, "PET" means polyethylene terephthalate fibers and "PP" means polypropylene fibers. Further, in Table 1, the "acrylic adhesive" of Examples 2-7 and Comparative Example 1 means the same adhesive as that used in Example 1.

**[Table 1]**

| | | | Example 1 | Example 2 | Example 3 | Example 4 | Example 5 | Example 6 | Example 7 | Comp. Ex. 1 |
|---|---|---|---|---|---|---|---|---|---|---|
| Substrate layer | Fiber material | (-) | PET | PP | PET | PET | PET | PET | PET | PET |
| | Fiber diameter | (*µ*m) | 20 | 20 | 3 | 20 | 20 | 20 | 20 | 20 |
| | Basis weight | (g/m²) | 100 | 100 | 100 | 100 | 100 | 50 | 200 | 100 |
| | Thickness | (*µ*m) | 350 | 350 | 350 | 350 | 350 | 300 | 600 | 350 |
| | Apparent density | (g/cm³) | 0. 29 | 0.29 | 0.29 | 0.29 | 0.29 | 0.11 | 0. 33 | 0. 29 |
| | Shape of fused section 1 | Shape | Rhomboid | Rhomboid | Rhomboid | Rhomboid | Rhomboid | Rhomboid | Rhomboid | Rhomboid |
| | | Area (mm²) | 0.8 | 0.8 | 0. 8 | 0.8 | 0. 8 | 0. 8 | 0.8 | 0.8 |
| | Shape of fused section 2 | Shape | Rhomboid | Rhomboid | Rhomboid | Rhomboid | Rhomboid | Rhomboid | Rhomboid | |
| | | Area (mm²) | 0.4 | 0.4 | 0. 4 | 0.4 | 0. 4 | 0. 4 | 0.4 | |
| | Area of fused section (%) | Fused section 1 | 20 | 20 | 20 | 10 | 50 | 20 | 20 | 30 |
| | | Fused section 2 | 10 | 10 | 10 | 5 | 10 | 10 | 10 | 0 |
| | | Total | 30 | 30 | 30 | 15 | 60 | 30 | 30 | 30 |
| Adhesive layer | Adhesive | (-) | Acrylic adhesive | Acrylic adhesive | Acrylic adhesive | Acrylic adhesive | Acrylic adhesive | Acrylic adhesive | Acrylic adhesive | Acrylic adhesive |
| | Thickness | (*µ*m) | 30 | 30 | 30 | 30 | 30 | 30 | 30 | 30 |
| Evaluation results | Layer separation | Pass/Fail | A | A | A | A | A | A | A | A |
| | Sound deadening properties | Damping value (dB) | 6.6 | 5.3 | 6.5 | 6.9 | 5. 1 | 5. 4 | 5.3 | 5.3 |
| | | Pass/Fail | A | A | A | A | A | A | A | A |
| | Abrasion resistance | Scrape abrasion resistance repetition number | 311 | 328 | 242 | 125 | 173 | 108 | 251 | 21 |
| | | Pass/Fail | A | A | A | A | A | A | A | B |

As shown in Table 1, the binding tapes of Examples 1-7, which satisfy the configuration of the present invention, suppressed layer separation, and were also excellent in sound deadening properties and abrasion resistance. Meanwhile, although the binding tape of Comparative Example 1, which had only one type of fused section formed therein, could suppress layer separation, abrasion resistance was low. From the above results, it was confirmed that the binding tape according to the present invention can suppress layer separation and is also excellent in sound deadening properties and abrasion resistance.

## Claims

1. A binding tape having a substrate layer comprising a non-woven fabric, and an adhesive layer,
wherein the substrate layer is provided with at least two types of fused sections having different shapes or having different sizes,
wherein with respect to the total area of the substrate layer, the area of at least one of the types of the fused sections is 5% or more and the total area of the fused sections is 25-40%.

2. The binding tape according to claim 1, wherein the fused sections are formed by thermally fusing fibers of the non-woven fabric by a heat embossing.

3. The binding tape according to claim 1 or 2, having a scrape abrasion resistance repetition number of 100 times or more, as obtained by the measuring method described in the description.

4. The binding tape according to any one of claims 1 to 3, wherein fibers constituting the non-woven fabric are polyester fibers.

5. The binding tape according to any one of claims 1 to 4, wherein the nonwoven fabric has a basis weight of 50-200 g/m².

6. The binding tape according to any one of claims 1 to 5, wherein the nonwoven fabric has an apparent density of 0.1-0.4 g/cm³.

7. The binding tape according to any one of claims 1 to 6, wherein the substrate layer has a thickness of 300-600 µm.

8. The binding tape according to any one of claims 1 to 7, wherein the binding tape is for binding electrical wires.

## Patentansprüche

1. Bindeband mit einer Substratschicht, die einen nicht gewebten Stoff umfasst, und einer Klebstoffschicht,
wobei die Substratschicht mit mindestens zwei Arten von verschmolzenen Abschnitten mit unterschiedlichen Formen oder Größen versehen ist,
wobei, bezogen auf die Gesamtfläche der Substratschicht, die Fläche mindestens eines der Typen der verschmolzenen Abschnitte 5 % oder mehr beträgt und die Gesamtfläche der verschmolzenen Abschnitte 25-40 % beträgt.

2. Bindeband nach Anspruch 1, wobei die verschmolzenen Abschnitte durch thermisches Verschmelzen von Fasern des Vliesstoffs durch eine Wärmeprägung gebildet werden.

3. Bindeband nach Anspruch 1 oder 2, das eine Wiederholungszahl der Kratzabriebfestigkeit von 100 oder mehr aufweist, die durch das in der Beschreibung beschriebene Messverfahren ermittelt wird.

4. Bindeband nach einem der Ansprüche 1 bis 3, wobei die Fasern, aus denen der Vliesstoff besteht, Polyesterfasern sind.

5. Bindeband nach einem der Ansprüche 1 bis 4, wobei der Vliesstoff ein Flächengewicht von 50-200 g/m² aufweist.

6. Bindeband nach einem der Ansprüche 1 bis 5, wobei der Vliesstoff eine Rohdichte von 0,1-0,4 g/cm³ aufweist.

7. Bindeband nach einem der Ansprüche 1 bis 6, wobei die Substratschicht eine Dicke von 300-600 µm aufweist.

8. Bindeband nach einem der Ansprüche 1 bis 7, wobei das Bindeband zum Binden elektrischer Drähte dient.

## Revendications

1. Ruban de liaison comportant une couche de substrat composée d'un tissu non tissé et une couche d'adhésif,
dans lequel la couche de substrat est pourvue d'au moins deux types de sections fusionnées ayant des formes ou des tailles différentes,
dans lequel, par rapport à la surface totale de la couche de substrat, la surface d'au moins un des types de sections fusionnées est de 5 % ou plus et la surface totale des sections fusionnées est de 25 à 40 %.

2. Ruban de liaison selon la revendication 1, dans lequel les sections fusionnées sont formées en fusionnant thermiquement les fibres du tissu non tissé par un gaufrage à chaud.

3. Bande de liage selon la revendication 1 ou 2, ayant un nombre de répétition de la résistance à l'abrasion par grattage de 100 fois ou plus, tel qu'obtenu par la méthode de mesure décrite dans la description.

4. Ruban de liage selon l'une des revendications 1 à 3, dans lequel les fibres constituant le tissu non tissé sont des fibres de polyester.

5. Ruban de liage selon l'une des revendications 1 à 4, dans lequel le tissu non tissé a un poids de base de 50-200 g/m².

6. Ruban de liage selon l'une des revendications 1 à 5, dans lequel le tissu non tissé a une densité apparente de 0,1 à 0,4 g/cm³.

7. Ruban de reliure selon l'une des revendications 1 à 6, dans lequel la couche de substrat a une épaisseur de 300 à 600 pm.

8. Ruban de ligature selon l'une des revendications 1 à 7, dans lequel le ruban de ligature est destiné à ligaturer des fils électriques.
